Europäisches Patentamt

European Patent Office

Office européen des brevets

(11) Publication number : **0 479 736 A1**

## (12) EUROPEAN PATENT APPLICATION

(21) Application number : **91830398.3**

(22) Date of filing : **25.09.91**

(51) Int. Cl.⁵ : **F16D 1/08, F16F 15/30**

(30) Priority : **03.10.90 IT 6775390**

(43) Date of publication of application :
**08.04.92 Bulletin 92/15**

(84) Designated Contracting States :
**DE ES FR GB SE**

(71) Applicant : **FIAT AUTO S.p.A.**
**Corso Giovanni Agnelli 200**
**I-10135 Torino (IT)**

(72) Inventor : **Filippi, Enrico**
**Via Pacchiotti 12**
**I-10146 Torino (IT)**
Inventor : **Civiero, Mauro**
**Via Barbera 35**
**I-10135 Torino (IT)**

(74) Representative : **Buzzi, Franco et al**
**c/o Jacobacci-Casetta & Perani S.p.A. Via**
**Alfieri, 17**
**I-10121 Torino (IT)**

(54) **A device for coupling a system of intertial masses to a shaft, particularly for a test bed for brakes and clutches.**

(57)    A coupling device, particularly for a test bed for brakes and clutches, includes : a shaft (5) with an integral shoulder flange (6), and a series of flywheels (7, 8) which have central holes keyed to the shaft (5) and variable numbers of which can be interconnected and clamped to the shoulder flange (6) by tie-bolts (22). A bush (10) interposed between at least one flywheel (7) and the shaft (5) has an externally-tapered portion (12) which has axial slots (13) so as to form segments of a ring and which engages a corresponding taper (16) of the central hole in the flywheel so that the segments of the bush (10) are contracted resiliently and radially as a result of the coupling, thus eliminating the play between the shaft (5) and the flywheel (7). Each flywheel (7) keyed to the shaft (5) with the interposition of a bush (10) has threaded through-holes (20) near its central hole for facilitating the disengagement of its bush (10) in the rest condition.

EP 0 479 736 A1

Jouve, 18, rue Saint-Denis, 75001 PARIS

FIG. 1

The present invention relates to a device for coupling a system of inertial masses to a shaft, particularly for a test bed for brakes and clutches, including:
a shaft with an integral shoulder flange, and
a series of flywheels which have central holes keyed to the shaft and variable numbers of which can be interconnected and clamped to the shoulder flange by tie-bolts.

In a test bed for brakes and clutches, a series of flywheels of different masses is used to simulate the inertia of the rotating masses in different motor vehicles, the flywheels being connectible to each other and to a shaft which is rotated at high speed. The tolerances selected for the coupling between the flywheels and the shaft have to be a compromise to satisfy two conflicting requirements: on the one hand, play must be reduced in order to eliminate eccentricities in the system but, on the other hand, the flywheels must be easily coupled and uncoupled each time the inertia of the system has to be changed.

When the flywheels are keyed to the shaft some play inevitably remains and this results in eccentricities in the system which limit its maximum speed of rotation to 2,000/2,500 revolutions per minute. This limitation is due to the fact that the play causes the setting-up of flexural mechanical vibrations of the shaft, the amplitudes of which, as is known, are proportional to the square of the angular velocity and to the masses of the flywheels, and which cause fatigue of the system and a danger of failure.

The object of the present invention is to propose a device for coupling a system of inertial masses to a shaft which does not have the aforementioned disadvantages.

According to the invention, this object is achieved by the interposition of a bush between at least one flywheel and the shaft, the bush having an externally tapered portion which has axial slots such as to form segments of a ring and which engages a corresponding taper of the central hole in the flywheel so that the segments of the bush contract resiliently and radially as a result of the coupling, thus eliminating the play between the shaft and the flywheel.

The system thus produced is very precisely balanced because of the minimal eccentricity of the rotating masses which enables maximum speeds of rotation of approximately 8,000 revolutions per minute to be achieved.

In order that the flywheels can be uncoupled more conveniently, each flywheel which is keyed to the shaft with the interposition of a bush has threaded through-holes near its central hole and these are engaged by respective screws which can release the flywheel from its bush in the rest condition.

The invention is explained in detail below with reference to the drawings, provided purely by way of non-limiting example, in which:

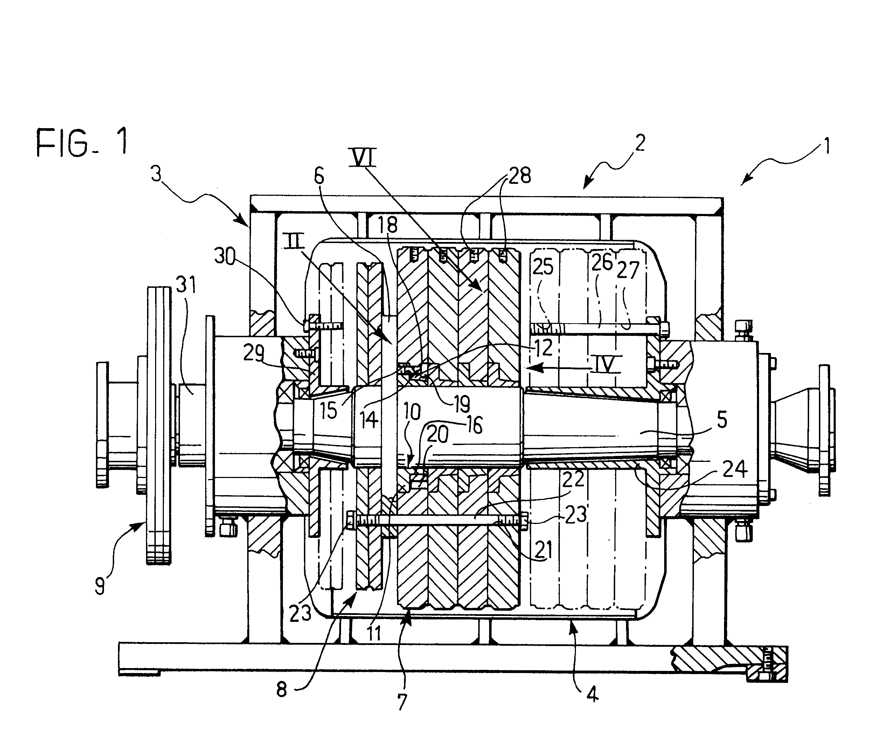

Figure 1 is a partially-sectioned, cut-away view of the part of the test bed which includes the flywheels,

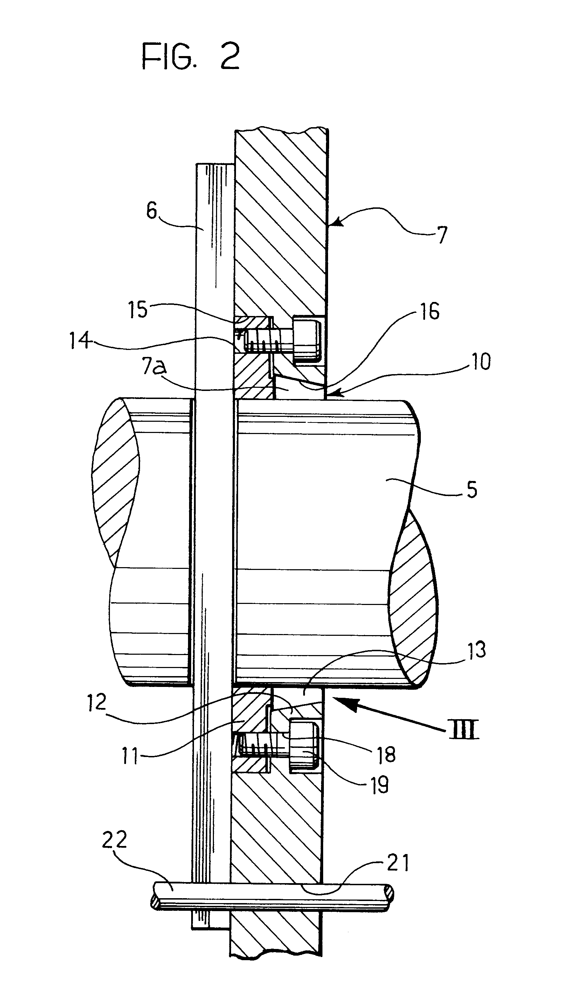

Figure 2 is a partially-sectioned view showing the coupling between the shaft, a bush and a flywheel, taken on the arrow II of Figure 1,

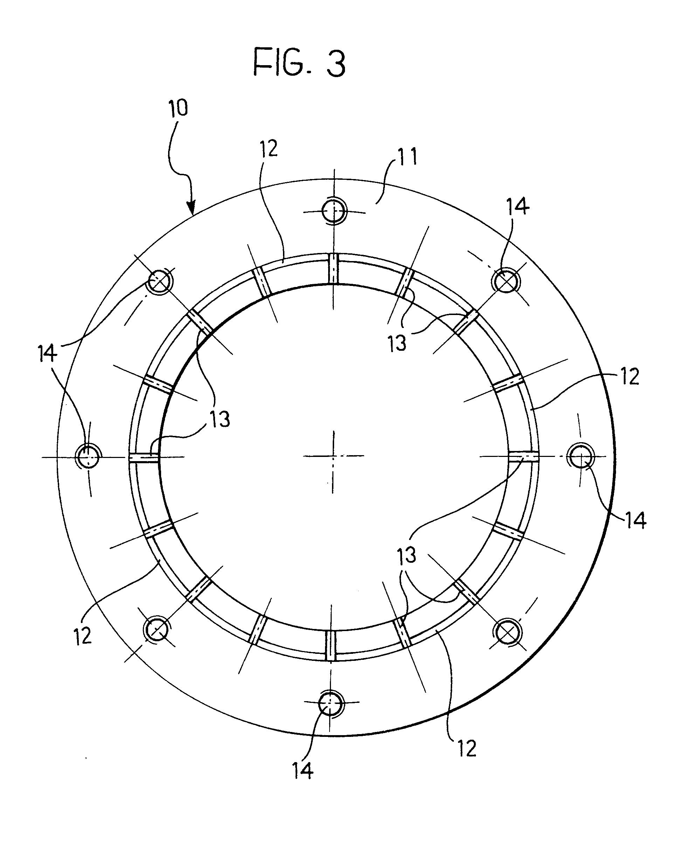

Figure 3 is a front elevation of the bush taken on the arrow III of Figure 2,

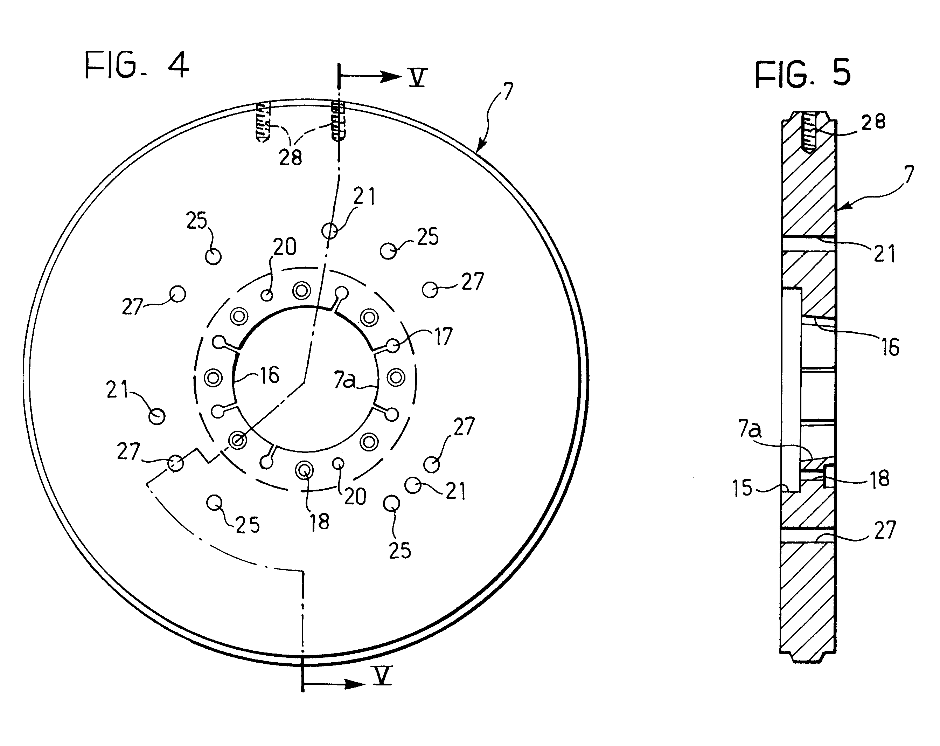

Figure 4 is a front elevation of the flywheel taken on the arrow IV of Figure 1,

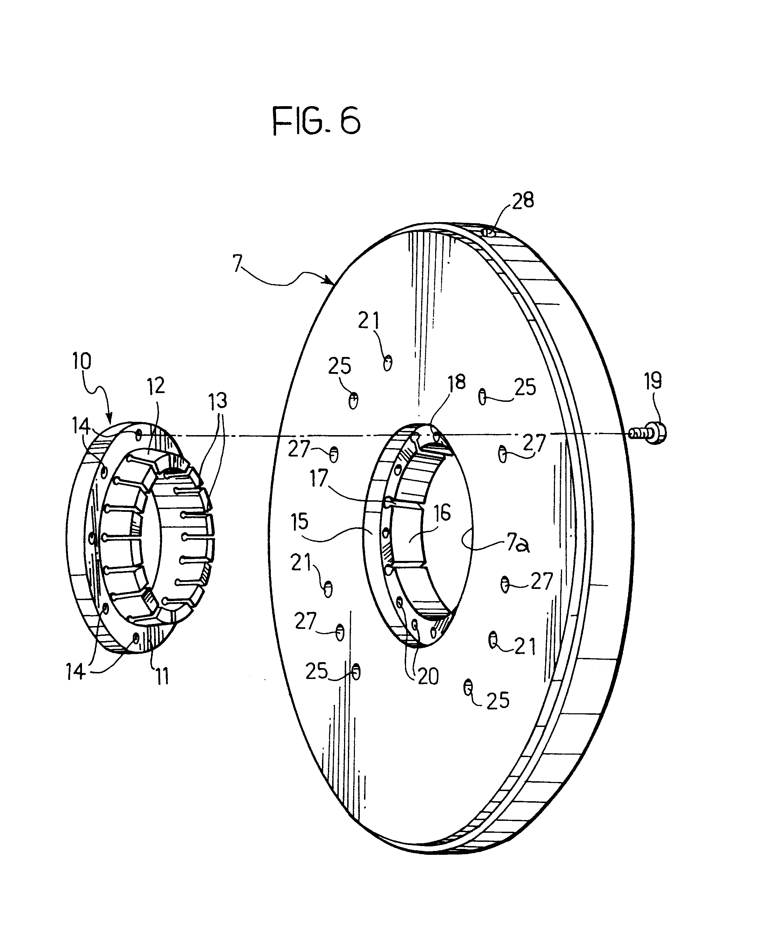

Figure 5 is a sectional side view taken on the line V-V of Figure 4, and
Figure 6 is an exploded perspective view of the bush and the flywheel taken on the arrow VI of Figure 1.

With reference to the drawings, the part of a test bed for brakes and clutches which includes the inertial masses is indicated 1. The outer support structure 2 thereof includes a frame 3 which supports within it a housing 4. Within the housing 4, a shaft 5 including a shoulder flange 6 carries sets of annular flywheels 7, 8 and 9 for rotation. One flywheel of the set 7 and one flywheel of the set 8 are arianged with respective faces in contact with the shoulder flange 6 by means of which frictional driving- forces are exchanged. n bush 10 comprising an annular projection 11 and an externally frusto-conical portion 12 is interposed between the shaft 5 and each of the flywheels of the set 7, which are the heaviest and therefore have the greatest problems with vibration caused by eccentricity. The frusto-conical portion 12 has axial slots 13 such as to form segments of a ring and the annular projection 11 has axial threaded holes 14.

The central hole 7a of the flywheel 7 has a seat 15 whose shape is complementary to that of the annular projection 11 of the bush 10 and a frusto-conical surface 16 which is adapted to engage the corresponding portion 12 of the bush 10. The flywheel 7 also has axial channels 17 on its frusto-conical surface 16 and, near the seat 15, has non-threaded axial through-holes 18 engaged by screws 19. The screws 19 are also screwed tightly into the threaded holes 14 in the bush 10 so as to connect the flywheel of the set 7 firmly to its bush 10.

Adjacent the holes 18, each flywheel of the set 7 also has two threaded axial through-holes 20 whose function will be explained below. The face of each flywheel of the set 7 has three axial through-holes 21 in which respective tie-bolts 22 are inserted and these are tensioned by nuts 23 on their ends to fix the flywheels to the shoulder flange 6 of the shaft 5. A fixed tubular element 24 coaxial with the shaft 5 is positioned on one side of the flywheels of the set 7 to hold any flywheels which are not to be rotated with the shaft. For this purpose, respective retaining screws 26 engage four threaded through-holes 25 in the fixed flywheel of the set 7 which faces the other rotating flywheels of the same set. If other flywheels of the same set are kept stationary, the screws 26 engage four respective non-threaded through-holes 27 in each fixed flywheel of the set 7 which does not directly face the other rotating flywheels. The outer peripheral surface of each flywheel of the set 7 also has radial holes 28 in which respective balancing screws are engaged. n fixed tubular element 29 similar to the element 24 is provided on one side the set of flywheels 8 for storing the flywheels of the set 8 which are not to be rotated. Screws 30 similar to the screws 26 are used if it is wished to clamp one or more flywheels of the set 8 to the tubular element 29. Moreover, a further fixed tubular element 31 is provided outside the structure 2 for the set of flywheels 9, its use being analogous to that of the elements 24 and 29.

As stated, the flywheels of the set 7 are the most awkward as regards balancing and eccentricity since they are the heaviest. These are the flywheels which have the bushes 10 constituting the easily removable coupling devices which, once fitted, completely eliminate play between the shaft and the flywheels. In fact, when the coupling has been effected, the segments of the bush 10 are resiliently deformed to take up any play. When the screws 19 are fully tightened, the flywheel 7 is anchored to the bush 10 which is deformed and connects the shaft 5 rigidly to the flywheel 7 by friction.

In order to uncouple a flywheel from its bush 10 and hence from the shaft 5 when the machine is at rest, the threaded through-holes 20 are engaged by screws which are screwed in until they interfere with the annular projection 11, enabling the flywheel to be removed easily from its bush 10.

A coupling device may be provided for only one set of flywheels of the machine or for several sets simultaneously.

Naturally, the forms of embodiment and details of construction may be varied widely without thereby departing from the scope of the present invention.

## Claims

1. A device for coupling a system of inertial masses to a shaft, particularly for a test bed for brakes and clutches, including:

   a shaft (5) with an integral shoulder flange (6), and

   a series of flywheels (7, 8, 9) which have central holes keyed to the shaft (5) and variable numbers of which can be interconnected and clamped to the shoulder flange (6) by tie-bolts (22), characterised in that

   a bush (10) interposed between at least one flywheel (7) and the shaft (5) has an externally-tapered portion (12) which has axial slots (13) such as to form serpents of a ring and which engages a corresponding taper (16) of the central hole in the flywheel (7) so that the serpents of the bush (10) contract resiliently and radially as a result of the coupling, thus eliminating the play between the shaft (5) and the flywheel (7).

2. A device according to Claim 1, characterised in that each bush (10) is fixed to its flywheel (7) by clamping screws (19) which engage through-holes (18) near the central hole in the flywheel.

3. A device according to Claim 2, characterised in that each bush (10) has an annular projection (11) which is coupled with a seat (15) of corresponding shape adjacent the central hole in the flywheel (7) and in which the clamping screws (19) are engaged.

4. A device according to Claim 3, characterised in that each flywheel (7) keyed to the shaft (5) with the interposition of a bush (10) has threaded through-holes (20) near its central hole for facilitating the disengagement of the bush (10) in the rest condition.

FIG. 1

# FIG. 2

# FIG. 3

FIG. 4

FIG. 5

EP 0 479 736 A1

# FIG. 6

**European Patent Office**

## EUROPEAN SEARCH REPORT

Application Number

EP 91 83 0398

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-2 676 849 (HOUCK) <br> * the whole document * <br> --- | 1-4 | F16D1/08 <br> F16F15/30 |
| Y | US-A-3 479 905 (HELRIGEL) <br> * the whole document * <br> --- | 1-4 | |
| A | US-A-4 668 116 (ITO) <br> * the whole document * <br> --- | 1 | |
| A | US-A-4 494 889 (THOMPSON) <br> * column 2 - column 4; figures 1-5,7 * <br> ----- | 1-4 | |
|  |  |  | TECHNICAL FIELDS SEARCHED (Int. Cl.5) |
|  |  |  | F16D <br> F16F |

The present search report has been drawn up for all claims

| Place of search | Date of completion of the search | Examiner |
|---|---|---|
| THE HAGUE | 08 JANUARY 1992 | BALDWIN D.R. |